# EUROPÄISCHE PATENTSCHRIFT

(11) **EP 2 410 799 B1**
(45) Veröffentlichungstag und Bekanntmachung des Hinweises auf die Patenterteilung: **15.03.2017**
(21) Anmeldenummer: 11173436.4
(22) Anmeldetag: 11.07.2011
(51) Int. Cl.: H04W 68/08, H04W 60/02, H04W 60/04, H04W 68/04

(54) **Verfahren zur Reduzierung des verwendeten Paging-Bereiches für ein Mobilendgerät und entsprechendes Kommunikationssystem**
Method for reducing the paging area for a mobile terminal and corresponding communication system
Procédé pour la réduction de la zone de recherche pour un terminal mobile et un système de communication correspondant

(30) Priorität: 21.07.2010 DE 102010031626
(43) Veröffentlichungstag der Anmeldung: 25.01.2012
(73) Patentinhaber: Vodafone Holding GmbH, 40213 Düsseldorf (DE)
(72) Erfinder: Kulakov, Alexej, 40595 Düsseldorf (DE); Wild, Peter, 47807 Krefeld (DE); Lu, Yang, 40489 Düsseldorf (DE)
(74) Vertreter: Jostarndt Patentanwalts-AG

(56) Entgegenhaltungen:
- WO-A1-2010/054544
- US-A1- 2009 104 905
- US-A1- 2010 075 698
- HUAWEI: "TR 24.801, CT1 open issues related to tracking area concept", 3GPP DRAFT; C1-070915_CT1 OPEN ISSUE FOR TA CONCEPT_REV 1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, Bd. CT WG1, Nr. Warsaw, Poland; 20070402, 2. April 2007 (2007-04-02), XP050025128, [gefunden am 2007-04-02]

## Beschreibung

### Technisches Gebiet

Die Erfindung betrifft ein Verfahren zum Lokalisieren eines Endgeräts in einem Netzwerksystem. Ferner betrifft die Erfindung ein Kommunikationssystem, in dem das Verfahren durchgeführt werden kann.

### Hintergrund der Erfindung

Um in einem zellularen Mobilfunknetz eine Datenverbindung zu einem Endgerät aufzubauen, muss das Endgerät zunächst lokalisiert werden, d.h. es muss festgestellt werden, in welcher Funkzelle des Mobilfunknetzes es sich befindet. Vor dem Aufbau einer angeforderten Datenverbindung wird zu diesem Zweck netzwerkseitig ein Endgerätesuchruf ausgesendet, den das Endgerät mit einer Angabe der Funkzelle beantwortet, in der es sich aktuell befindet. Die Aussendung des Endgerätesuchrufs wird auch als Paging bezeichnet.

Da eine sehr hohe Bandbreite des Paging-Kanals erforderlich wäre, wenn der Endgerätesuchruf innerhalb des gesamten Netzes ausgesendet würde, werden benachbarte Funkzellen zu Suchbereichen zusammengefasst, wobei ein Endgerät bei einem Eintritt in einen Suchbereich eine Lokalisierungsnachricht mit einer Angabe dieses Suchbereichs an das Netzwerk sendet. Ferner werden üblicherweise Lokalisierungsnachrichten in regelmäßigen Zeitabständen von einem Endgerät an das Netzwerk gesendet. Somit besteht netzwerkseitig Kenntnis über den Suchbereich, in dem sich das Endgerät befindet, und das Paging kann auf diesen Suchbereich beschränkt werden. Je kleiner die Suchbereiche sind, d.h. je weniger Funkzellen sie umfassen, desto geringer ist der Bandbreitenbedarf des Paging-Kanals, da in kleineren Suchbereichen in der Regel weniger Endgeräte registriert sind und somit weniger Endgerätesuchrufe zur gleichen Zeit gesendet werden müssen. Gleichzeitig wird bei kleineren Suchbereichen jedoch eine höhere Anzahl an Lokalisierungsnachrichten gesendet, da Endgeräte häufiger von einem Suchbereich in einen anderen Suchbereich wechseln. Die Größe der Suchbereiche ergibt sich somit aus einem Kompromiss zwischen dem Bandbreitenbedarf des Paging-Kanals und der Häufigkeit von Lokalisierungsnachrichten.

Die zuvor genannten Suchbereiche werden in GSM-Mobilfunknetzen (GSM: Global System for Mobile Communications) als Location Areas (LAs) und im Rahmen des GPRS-Standards (GPRS: General Packet Radio Service) als Routing Areas (RAs) bezeichnet, wobei eine Location Area in der Regel eine oder mehrere Routing Areas umfasst. Innerhalb des als UTRAN (UMTS Terrestrial Radio Access Network) bezeichneten Radionetzwerks nach dem UMTS-Standard sind im leitungsvermittelnden Teil ebenfalls Location Areas und im paketvermittelnden Teil Routing Areas als Suchbereiche vorgesehen, sofern sich das Endgerät im so genannten Idle-Zustand befindet.

Derzeit werden unter der Bezeichnung LTE/SAE (LTE: Long Term Evolution, SAE: System Architecture Evolution) Mobilfunksysteme der nächsten Generation entwickelt bzw. standardisiert, die ein Funknetzwerk mit der Bezeichnung E-UTRAN (Evolved UTRAN) umfassen. In Bezug auf das E-UTRAN werden die zuvor genannten Suchbereiche gemäß Kapitel 7.3 des technischen Berichts TR 23.882 "3GPP System Architecture Evolution: Report on Technical Options and Conclusions" der 3GPP als Tracking Areas (TAs) bezeichnet, wobei eine Tracking Area insbesondere einer Location Area oder einer Routing Area entsprechen kann.

Auch im Hinblick auf Wechsel eines Endgeräts von dem E-UTRAN in ein anderes Netzwerk, wie beispielsweise in das UTRAN, oder umgekehrt, wurde ferner vorgeschlagen, einem Endgerät zur selben Zeit sowohl eine Tracking Area des E-UTRAN als auch einen Suchbereich des anderen Netzwerks, wie beispielsweise eine Location Area oder eine Routing Area des UTRAN zuzuordnen. Das Senden einer Lokalisierungsnachricht von dem Netzwerk ist in diesem Fall nur dann vorgesehen, wenn das Endgerät in einen Suchbereich des E-UTRAN oder des anderen Netzwerks eintritt, der ihm zuvor nicht zugeordnet war, während bei einem Wechsel von einem dem Endgerät zugeordneten Suchbereich in einen anderen ihm zugeordneten Suchbereich keine Signalisierung an das Netzwerk erfolgt. Hierdurch kann vermieden werden, dass bei einem Wechsel zwischen den Netzwerken eine Signalisierung erfolgen muss. Ferner wurde vorgeschlagen, dass einem Endgerät zur selben Zeit mehrere Tracking Areas des E-UTRAN zugeordnet werden und gleichfalls nur dann eine Lokalisierungsnachricht an das Netzwerk gesendet wird, wenn das Endgerät in einen Suchbereich eintritt, der ihm zuvor nicht zugeordnet war.

Die dem Endgerät gleichzeitig zugeordneten Suchbereiche werden als äquivalente Suchbereiche (Equivalent Tracking Areas, ETA) bezeichnet. Das Konzept der äquivalenten Suchbereiche ist in Anhang D.2.4.1 des technischen Berichts TR 23.882 der 3GPP und in dem 3GPP-Dokument R3-060457 (siehe http://www.3gpp.org/ftp/tsg_ran/WG3_lu/TSGR3_51bis/docs/R3-060457.zip) beschrieben.

Bei dem Konzept der äquivalenten Suchbereiche ist netzwerkseitig nicht bekannt, in welchem der äquivalenten Suchbereiche sich das Endgerät befindet. Gemäß dem technischen Bericht TR 23.882, Anhang D.2.4.1, erfolgt das Paging dementsprechend in allen äquivalenten Suchbereichen. Dies ist jedoch mit einer sehr hohen Netzlast verbunden und führt zu einem sehr hohen Bandbreitenbedarf des Paging-Kanals.

WO 2012/054544 A1 offenbart ein Lokalisierungsverfahren in einem mobilen Kommunikationssystem. Im Rahmen dieses Lokalisierungsverfahrens wird versucht ein mobiles Endgerät zunächst mit einer ersten Lokalisierungsnachricht zu lokalisieren, die von einer Mobilitäts Managmenteinheit in dem letzten Suchbereich abgegeben wird, in dem das mobile Endgerät zuletzt erfolgreich registriert war. Bei einem Fehlschlag der Lokalisierung wird die Lokalisierung in weiteren Suchbereichen fortgesetzt, die in einer Suchbereichsliste des mobilen Endgerätes gespeichert sind.

US 2010/0075698 A1 offenbart ein Verfahren und eine Vorrichtung zum Betrieb eines Telekommunikationsnetzwerkes, die zumindest eine Femtozelle und eine Makrozelle beinhalten die einem Suchbereich zugeordnet sind. Ein Aspekt des Verfahrens ist es eine Kennung für die Femtozelle einer Suchbereichsidentifizierungsliste eines mobilen Endgerätes hinzuzufügen, wenn dieses Endgerät sich im Bereich der Femtozelle oder deren Umgebung befindet. Des Weiteren beinhaltet das Verfahren, zunächst nur an einen Teil von Zellen mit einer Kennung in der Suchbereichsidentifizierungsliste eine Lokalisierungsnachricht zu senden.

### Darstellung der Erfindung

Es ist eine Aufgabe der vorliegenden Erfindung, ein Verfahren anzugeben, bei dem ein Paging innerhalb äquivalenter Suchbereiche eines Netzwerksystem mit einem möglichst geringen Bandbreitenbedarf des Paging-Kanals durchgeführt werden kann.Erfindungsgemäß wird diese Aufgabe durch ein Verfahren mit den Merkmalen des Patentanspruchs 1 und durch ein Kommunikationssystem mit den Merkmalen des Patentanspruchs 12 gelöst.

Gemäß einem ersten Aspekt der Erfindung wird ein Verfahren zum Lokalisieren eines mobilen Endgeräts in einem Netzwerksystem vorgeschlagen. Das Netzwerksystem umfasst wenigstens ein erstes Zugangsnetzwerk eines ersten Mobilfunkstandard, welches mehrere Zellen aufweist, die zu einem oder mehreren Suchbereichen zusammengefasst sind. Ein oder mehrere Suchbereiche wenigstens des ersten Zugangsnetzwerks sind zu einem Äquivalenzbereich zusammengefasst. Das mobile Endgerät sendet bei einem Eintritt in einen Äquivalenzbereich eine Lokalisierungsnachricht an ein Netzwerk und/oder das mobile Endgerät sendet in vorgegebenen Zeitabständen Lokalisierungsnachrichten an wenigstens das erste Zugangsnetzwerk. Das Verfahren sieht vor, dass die Lokalisierungsnachrichten eine Angabe eines Unterbereichs eines Äquivalenzbereichs enthalten, in dem sich das mobile Endgerät bei Absendungen einer Lokalisierungsnachricht befindet und netzwerkseitig wenigstens der in der zuletzt erhaltenen Lokalisierungsnachricht angegebene Unterbereich gespeichert wird, und dass wenigstens ein erster netzwerkseitiger Endgerätesuchruf innerhalb des gespeicherten Unterbereichs ausgesendet wird, um das mobile Endgerät zu lokalisieren.

Gemäß einem weiteren Aspekt der Erfindung ist ein Kommunikationssystem vorgesehen. Das Kommunikationssystem umfasst wenigstens ein erstes Zugangsnetzwerk eines ersten Mobilfunkstandard, welches mehrere Zellen aufweist, die zu einem oder mehreren Suchbereichen zusammengefasst sind, wobei ein oder mehrere Suchbereiche wenigstens des ersten Netzwerks zu einem Äquivalenzbereich zusammengefasst sind, und es umfasst ein Endgerät, das dazu eingerichtet ist, bei einem Eintritt in einen Äquivalenzbereich eine Lokalisierungsnachricht an das Netzwerk zu senden und/oder in vorgegebenen Zeitabständen Lokalisierungsnachrichten an das erste Netzwerk zu senden. Das Kommunikationssystem zeichnet sich dadurch aus, dass die Lokalisierungsnachrichten eine Angabe eines Unterbereichs eines Äquivalenzbereichs enthalten, in dem sich das Endgerät bei Absendungen einer Lokalisierungsnachricht befindet und dass eine Einrichtung vorhanden ist, die dazu ausgebildet ist, wenigstens den in der zuletzt erhaltenen Lokalisierungsnachricht angegebenen Unterbereich zu speichern und die Aussendungen wenigstens eines ersten Endgerätesuchrufs innerhalb des gespeicherten Unterbereichs auszulösen, um das Endgerät zu lokalisieren.

Das Paging wird zunächst nur in einem Unterbereich dem Endgerät zugeordneten Äquivalenzbereichs vorgenommen, so dass der Pagingbereich gegenüber dem Äquivalenzbereich verkleinert ist. Für das Paging wird der Unterbereich gewählt, in dem sich das Endgerät bei dem letzten Suchbereichsaktualisierungsvorgang befunden hat. Da die Mehrzahl der Endgeräte sich in der Regel nicht weit oder nur langsam bewegt, besteht eine große Wahrscheinlichkeit dafür, das Endgerät in diesem Unterbereich zu erreichen. Damit wird das Paging effizienter durchgeführt und der Bandbreitenbedarf des Pagingkanals verringert.

Für das Verfahrens und das Kommunikationssystem ist weiterhin vorgesehen, dass wenigstens ein zweiter netzwerkseitiger Endgerätesuchruf innerhalb eines weiteren Unterbereichs des Äquivalenzbereichs, in dem sich der gespeicherte Unterbereich befindet, ausgesendet wird, wenn das Endgerät den ersten Endgerätesuchruf nicht innerhalb eines vorgegebenen Zeitintervalls beantwortet.

Mit dem zweiten Endgerätesuchruf kann insbesondere ein Endgerät erreicht werden, dass sich aus dem Unterbereich des Äquivalenzbereichs, in dem es sich bei dem letzten Suchbereichsaktualisierungsvorgang befunden hat, herausbewegt hat, so dass es den ersten Endgerätesuchruf nicht empfangen konnte.

Darüber hinaus beinhaltet das Verfahren und das Kommunikationssystems, dass der weitere Unterbereich wenigstens einen räumlich mit dem gespeicherten Unterbereich überlappenden und/oder räumlich zu dem gespeicherten Unterbereich benachbarten Unterbereich eines Zugangsnetzwerks eines zweiten Mobilfunkstandard umfasst, wobei der zweite Mobilfunkstandard verschieden vom ersten Mobilfunkstandard ist, und wobei das Zugangsnetzwerk des zweiten Mobilfunkstandards verschieden von dem Zugangsnetzwerk ist, dem der gespeicherte Unterbereich zugehörig ist. Diese beiden Zugangsnetzwerk sind mit einem Kernnetzwerk verbunden sind und beiden Zugangsnetzwerken ist jeweils eine Vielzahl von Basisstationen zugeordnet, die entsprechend einer Zugangstechnologie des jeweiligen Zugangsnetzwerk ausgestaltet sind.

Diese ermöglicht es, mit dem zweiten Gerätsuchruf solche Endgeräte zu erreichen, die zwar ihren Standort seit dem letzten Suchbereichsaktualisierungsvorgang nicht verändert haben, die sich jedoch mit einem anderen Netzwerk verbunden haben. Dabei wird es auch in der Ausführungsform vermieden, den zweiten Gerätesuchruf innerhalb des gesamten Äquivalenzbereichs auszusenden. Wie bei der zuvor genannten Ausgestaltung wird der Gerätesuchruf in dem gespeicherten Unterbereich vorzugsweise wiederholt, d.h., der weitere Unterbereich enthält neben dem zu dem gespeicherten Unterbereich benachbarten Unterbereich des Äquivalenzbereichs auch den gespeicherten Unterbereich.

Eine weitere Ausgestaltung des Verfahrens und des Kommunikationssystems sieht vor, dass der weitere Unterbereich wenigstens einen dem gespeicherten Unterbereich räumlich benachbarten Unterbereich des Netzwerks, dem der gespeicherte Unterbereich zugehörig ist.

In dieser Ausführungsform können Endgeräte, die sich nur in einem kleineren Umkreis um den Standpunkt während des letzten Suchbereichsaktualisierungsvorgangs bewegt haben, mit dem zweiten Gerätesuchruf erreicht werden, ohne diesen innerhalb des gesamten Äquivalenzbereichs aussenden zu müssen. Der weitere Unterbereich enthält neben dem zudem gespeicherten Unterbereich benachbarten Unterbereich vorzugsweise auch den gespeicherten Unterbereich, so dass der Gerätesuchruf in diesem Bereich wiederholt wird. Hierdurch kann mit dem zweiten Suchruf ein Endgerät erreicht werden, das seinen Standort gegenüber dem letzten Suchbereichsaktualisierungsvorgang nicht verändert hat, und während des ersten Gerätesuchrufs lediglich vorübergehend keinen Kontakt zu dem Netzwerk hatte, beispielsweise aufgrund einer Funkstörung.

Eine Ausführungsform des Verfahrens und des Kommunikationssystems ist dadurch gekennzeichnet, dass es sich bei dem gespeicherten Unterbereich um eine erste Zelle eines ersten Netzwerks handelt.

Diese Ausführungsform hat den Vorteil, dass der erste Gerätesuchruf lediglich in einem sehr kleinen Unterbereich des Äquivalenzbereichs ausgesendet werden muss, wodurch der Pagingkanal in den übrigen Zellen nicht belastet wird. Insbesondere in einem Äquivalenzbereich, in dem die meisten Endgeräte über eine längere Zeit standortfest sind, und somit eine Funkzelle nicht verlassen, kann die Paginglast hierdurch erheblich reduziert werden.

Bei einer weiteren Ausgestaltung des Verfahrens und des Kommunikationssystems ist vorgesehen, dass es sich bei dem gespeicherten Unterbereich um einen ersten Suchbereich des ersten Netzwerks handelt.

Vorteilhaft handelt es sich bei einem Suchbereich auch um einen relativ kleinen Bereich, in dem das Paging ausgeführt wird, wobei auch die Endgeräte erreicht werden können, die ihren Standort seit dem letzten Suchbereichsaktualisierungsvorgang nur geringfügig verändert haben, insbesondere solche, die lediglich die Funkzelle innerhalb desselben Suchbereichs gewechselt haben.

Bei dem zweiten Gerätesuchruf wird der Pagingbereich ausgedehnt, um ein Endgerät erreichen zu können, das seinen Standort seit dem letzten Suchbereichsaktualisierungsvorgang verändert hat oder das in ein anderes Netzwerk gewechselt ist. Dabei beinhaltet eine Weiterbildung des Verfahrens und des Kommunikationssystems, dass der weitere Unterbereich wenigstens eine dem gespeicherten Unterbereich räumlich benachbarte Zelle des ersten Netzwerks umfasst und/oder dass der weitere Unterbereich einen wenigstens eine Zelle umfassenden Zellbereich des zweiten Netzwerks umfasst, wobei der Zellbereich räumlich mit dem gespeicherten Unterbereich überlappt oder räumlich benachbart zu dem gespeicherten Unterbereich angeordnet ist.

Ferner ist bei einer Weiterbildung des Verfahrens und des Kommunikationssystems vorgesehen, dass der weitere Unterbereich wenigstens einen dem gespeicherten Unterbereich räumlich benachbarten Suchbereich des ersten Netzwerks umfasst und/oder dass der weitere Unterbereich einen wenigstens einen Suchbereich umfassenden Suchbereichsabschnitt des zweiten Netzwerks umfasst, wobei der Suchbereichsabschnitt mit dem gespeicherten Unterbereich räumlich überlappt oder räumlich benachbart zu dem gespeicherten Unterbereich ist. Dabei umfasst ein Suchbereichsabschnitt mehrere Suchbereiche, die vorzugsweise aneinander angrenzen.

Durch die Ausweitung des Endgerätesuchrufs auf einen vollständigen Suchbereich lässt sich die Wahrscheinlichkeit erhöhen, das gewünschte Endgerät mit dem zweiten Gerätesuchruf zu erreichen.

Auch in den beiden zuvor genannten Ausgestaltungen umfasst der weitere Unterbereich vorzugsweise zusätzlich den gespeicherten Unterbereich. Hierdurch wird der Gerätesuchruf in dem gespeicherten Unterbereich wiederholt.

Bei einer Weiterbildung des Verfahrens und des Kommunikationssystems ist vorgesehen, dass der weitere Unterbereich zusätzlich den gespeicherten Unterbereich umfasst.

Ferner beinhaltet eine Ausführungsform des Verfahrens und des Kommunikationssystems, dass der weitere Unterbereich den gesamten Äquivalenzbereich umfasst, dem der erste Unterbereich zugehörig ist.

Nachdem das Endgerät beim Verlassen eines Äquivalenzbereichs und den Eintritt in einen neuen Äquivalenzbereich im Rahmen eines Suchbereichsaktualisierungsvorgangs eine Lokalisierungsnachricht an das Netzwerk sendet, stellt diese Ausführungsform sicher, dass das Endgerät mit einem Gerätesuchruf erreicht werden kann. Hierbei kann es sich um den zweiten oder einen weiteren Gerätesuchruf handeln.

Die zuvor beschriebenen Ausgestaltungen der Erfindung sehen eine sukzessive Vergrößerung des Pagingbereichs bei wiederholten Gerätesuchrufen vor. Eine weitere Ausgestaltung des Verfahrens und des Kommunikationssystems ist dadurch gekennzeichnet, dass netzwerkseitig die in einer Mehrzahl nacheinander gesendeter Lokalisierungsnachrichten angegebenen Unterbereiche gespeichert werden, und dass der Äquivalenzbereich auf den in der zuletzt erhaltenen Lokalisierungsnachricht angegebene Unterbereich verkleinert wird, wenn der in der zuletzt erhaltenen Lokalisierungsnachricht angegebene Unterbereich mit den Unterbereichen übereinstimmt, die in einer vorgegebenen Anzahl von Lokalisierungsnachrichten enthalten sind, die der zuletzt erhaltenen Lokalisierungsnachricht vorausgegangen sind.

Bei dieser Ausgestaltung wird anhand aufeinander folgender Lokalisierungsnachrichten zunächst ermittelt, ob sich ein Endgerät bewegt. Wird dabei festgestellt, dass dies nicht der Fall ist, dann wird der dem Endgerät zugeordnete Äquivalenzbereich auf den Suchbereich begrenzt, in dem sich das Endgerät befindet. Hierdurch wird für stationäre Endgeräte sichergestellt, dass sie bereits mit dem ersten Gerätesuchruf erreicht werden, sofern sie Kontakt zum Netzwerk haben.

Eine verbundene Ausführungsform des Verfahrens und des Kommunikationssystems sieht vor, dass es sich bei den Unterbereichen um Suchbereiche handelt.

Eine weitere verbundene Ausführungsform des Verfahrens und des Kommunikationssystems beinhaltet, dass das Endgerät eine Lokalisierungsnachricht an das Netzwerksystem sendet, wenn es in eine Zelle eines Netzwerks eintritt, die dem verkleinerten Unterbereich nicht zugehörig ist.

Darüber hinaus zeichnet sich eine Ausgestaltung des Verfahrens und des Kommunikationssystems dadurch aus, dass das Netzwerksystem ein E-UTRAN umfasst.

Die zuvor genannten sowie weitere Vorteile, Besonderheiten und zweckmäßige Weiterbildungen der Erfindung werden auch anhand der nachfolgenden Beschreibung von Ausführungsbeispielen deutlich, die unter Bezugnahme auf die Figuren erfolgt.

### Kurze Beschreibung der Figuren

Von den Figuren zeigt
- Fig. 1: eine schematische Darstellung eines Kommunikationssystems und
- Fig. 2: eine schematische Darstellung einer zellularen Struktur der Funknetzwerke des in Figur 1 schematisch veranschaulichten Kommunikationssystems.

### Ausführliche Beschreibung von Ausführungsbeispielen

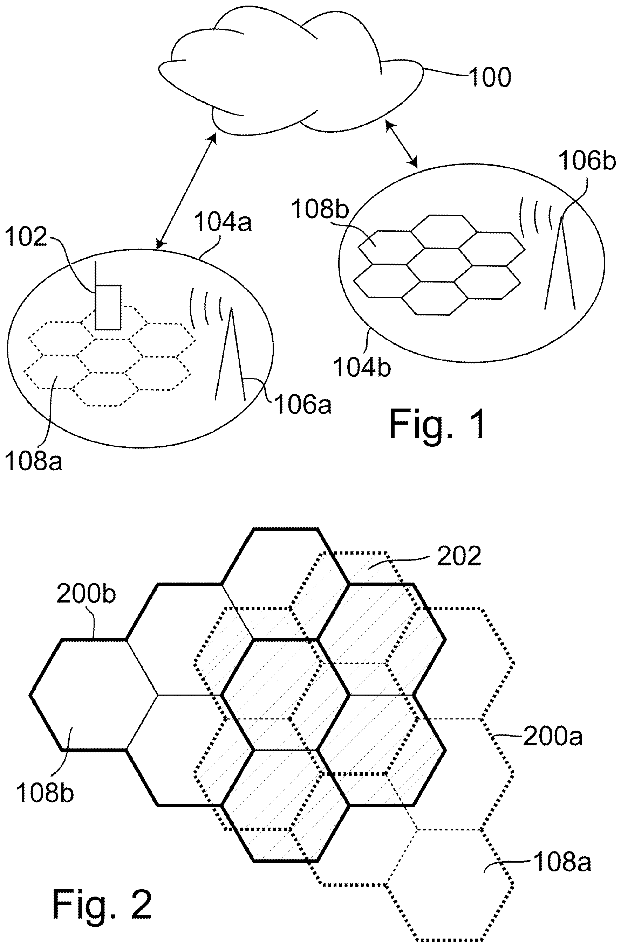

Figur 1 zeigt in einer schematischen Darstellung ein Kommunikationssystem mit einem Kernnetzwerk 100, das eine Infrastruktur zum Vermitteln von Datenverbindungen zu mobilen Endgeräten 102 enthält, von denen in Figur 1 beispielhaft eines dargestellt ist.

Das Kernnetzwerk 100 ist mit einer Vielzahl von Basisstationen verbunden, die jeweils eine Funkschnittstelle für den Zugang zu dem Kommunikationssystem in einer zugeordneten geografischen Region bzw. Zelle umfassen. In einer Ausgestaltung stellt das Kommunikationssystem unterschiedliche Zugangstechnologien für den Zugang bereit, denen jeweils ein eigenes Zugangsnetzwerk mit einer Vielzahl von Basisstationen zugeordnet ist, die entsprechend der Zugangstechnologie ausgestaltet sind. In der beispielhaften Darstellung in Figur 1 sind zwei Zugangsnetzwerke 104a,b vorgesehen, wobei für jedes Zugangsnetzwerk 104a,b beispielhaft jeweils eine Basisstation 106a,b dargestellt ist, die mehrere Zellen 108a,b versorgt. In Gebieten, in denen mehrere Zugangstechnologien verfügbar sind, überlappen sich Zellen 108a,b, die zu verschiedenen Zugangsnetzen 104a,b gehören. Das Endgerät 102 befindet sich in der beispielhaften Darstellung in Figur 1 im Zugangsnetzwerk 104a, dessen Zellen 108a in den Figuren gestrichelt gezeichnet sind, während die Zellen 108b des Zugangsnetzwerks 104b mit durchgezogenen Linien gezeichnet sind.

Die verschiedenen Zugangstechnologien können sich beispielsweise in den verwendeten Frequenzen, in den verwendeten Multiplexingverfahren unterscheiden und unterschiedlich Protokolle verwenden. In der vorliegenden Ausgestaltung mit zwei Zugangsnetzen handelt es sich bei einem Zugangsnetz 104a,b um ein UTRAN nach dem UMTS-Standard und bei dem anderen Zugangsnetz 104a,b um ein E-UTRAN eines LTE/SAE-Systems.

Endgeräte 102 von Nutzern des Kommunikationssystems können sich mit wenigstens einem Zugangsnetz 104a,b verbinden. Dies erfolgt vorzugsweise über eine Luftschnittstelle, die entsprechend des vorgesehenen Zugangsnetzes 104a,b ausgestaltet ist. In einer Ausführungsform ist ein Endgerät 102 für eine Verbindung zu mehreren Zugangsnetzwerken 104a,b ausgestaltet und kann das Zugangsnetzwerk 104a,b auswählen. Dies geschieht aufgrund einer Nutzervorgabe oder automatisch anhand vorgegebener Kriterien. Insbesondere kann sich das Endgerät 102 beispielsweise mit dem Zugangsnetzwerk 104a,b verbinden, das die höchste Signalstärke aufweist, oder es wird eine Prioritätsliste vorgegeben und das am höchsten priorisierte Zugangsnetzwerk 104a,b ausgewählt, das eine ausreichende Signalstärke aufweist. Die Prioritäten können nach den Fähigkeiten des Zugangsnetzes 104a,b vorgegeben werden, insbesondere nach der Geschwindigkeit der Datenübertragung und/oder den Diensten, die über die Zugangsnetzwerke 104a,b bereitgestellt werden.

Um ein Endgerät 102 zu kontaktieren, beispielsweise um eine eingehende Datenverbindung zu dem Endgerät 102 zu vermitteln, wird durch das Kernnetzwerk 100 die Funkzelle 108a,b ermittelt, in der sich das Endgerät 102 aktuell befindet. Hierzu wird netzwerkseitig ein Gerätesuchruf erzeugt und in einem Bereich ausgesendet. Das Endgerät 102 beantwortet den Gerätesuchruf mit der Angabe der Funkzelle 108a,b, in der es sich befindet. Nach dem Empfang der Antwort des Endgeräts 102 auf den Endgerätesuchruf kann eine Kommunikationsverbindung zu dem Endgerät 102 aufgebaut werden.

Der Gerätesuchruf wird in den Funkzellen 108a,b ausgesandt, die zu einem dem Endgerät 102 zugeordneten Äquivalenzbereich 202 gehören. In Figur 2 ist beispielhaft ein Äquivalenzbereich 202 dargestellt, wobei die benachbarten Funkzellen 108a,b zu weiteren Äquivalenzbereichen gehören, die in Figur 2 nicht kenntlich gemacht sind. Wie in Figur 2 dargestellt, kann ein Äquivalenzbereich 202 mehrere Suchbereiche 200a,b beinhalten. Suchbereiche 200a,b, die gemeinsam in einem Äquivalenzbereich 202 zusammengefasst sind, werden auch als äquivalente Suchbereiche bezeichnet. Die Suchbereiche 200a,b - deren Begrenzung in Figur 2 mit einer größeren Linienstärke dargestellt ist, als die Begrenzung der Funkzellen 108a,b - umfassen jeweils eine oder mehrere Funkzellen 108a,b eines Zugangsnetzwerks 104a,b die individuell festgelegt werden können. Kriterien hierfür sind beispielsweise die erwartete Anzahl von Endgeräten 102, die sich regelmäßig und/oder zu Spitzenzeiten in den Funkzellen 108a,b aufhalten. Ein Äquivalenzbereich 202 umfasst in einer Ausgestaltung wenigstens einen Suchbereich 200a in einem ersten Zugangsnetzwerk 104a und wenigstens einen Suchbereich 200b in einem weiteren Zugangsnetzwerk 104b (in der beispielhaft in Figur 2 dargestellten Ausgestaltung umfasst der Äquivalenzbereich 202 jeweils zwei Suchbereiche 200a,b eines Zugangsnetzwerks 104b, wobei die umfassten Suchbereiche 200a,b ihrerseits jeweils zwei Funkzellen 108a,b umfassen; die zu dem Äquivalenzbereich 202 gehörenden Funkzellen 108a,b sind schraffiert dargestellt). Dabei können sich die in einem Äquivalenzbereich 202 zusammengefassten Suchbereiche 200a,b verschiedener Zugangsnetzwerke 104a,b - wie in Figur 2 angedeutet - räumlich zumindest teilweise überlappen, so dass ein Äquivalenzbereich 202 einen bestimmten räumlichen Bereich in mehreren Zugangsnetzwerken 104a,b abdeckt. Gleichfalls kann es jedoch vorgesehen sein, dass ein Äquivalenzbereich 202 mehrere Suchbereiche 200a,b eines einzigen Zugangsnetzwerks 104a,b enthält. Außerdem kann ein Äquivalenzbereich 202 auch lediglich aus einem Suchbereich 200a,b eines einzigen Zugangsnetzwerks 104a,b bestehen.

In den Funkzellen 108a,b eines Suchbereichs 200a,b wird jeweils eine Kennung der Funkzelle 108a,b sowie eine Kennung des Suchbereichs 200a,b, dem die Funkzelle 108a,b zugeordnet ist, über einen Broadcast-Funkkanal gesendet und kann von den Endgeräten 102 in den Funkzellen 108a,b empfangen werden. Um in den Endgeräten 102 feststellen zu können, in welchem Äquivalenzbereich 202 sie sich befinden, wird in einer Ausgestaltung zusätzlich eine Kennung des Äquivalenzbereichs 202, dem eine Funkzelle 108a,b bzw. ein Suchbereich 200a,b zugeordnet ist, über den Broadcast-Funkkanal gesendet und von den anwesenden Endgeräten 102 empfangen. In einer weiteren Ausgestaltung wird der aktuelle Äquivalenzbereich 202 nicht über einen Broadcast-Funkkanal von dem Netzwerk 104a,b bereitgestellt, sondern für die vorgesehenen Äquivalenzbereiche 202 ist in den Endgeräten 200 jeweils eine Liste der enthaltenen Suchbereiche 200a,b hinterlegt. Anhand der empfangenen Kennung des Suchbereichs 200a,b ermittelt das Endgerät 102 unter Verwendung der Liste, in welchem Äquivalenzbereich 202 es sich befindet. Die Verwendung einer in dem Endgerät 102 gespeicherten Liste hat den Vorteil, dass die Suchbereichskennung nicht über den Broadcast-Funkkanal gesendet werden muss, wodurch sich der Netzwerkverkehr verringert. Innerhalb des Endgeräts 102 kann die Liste insbesondere in dem Teilnehmeridentifikationsmodul gespeichert sein, welches von dem Netzwerkbetreiber ausgegeben wird und für die Nutzung des Kommunikationssystems erforderlich ist. Darüber hinaus können Aktualisierungen der Liste von dem Kernnetzwerk an das Endgerät gesendet und im Endgerät 102 gespeichert werden. Dies ermöglicht es, bestehende Suchbereiche 200a,b anzupassen und neue Suchbereiche 200a,b zu ergänzen.

Wenn ein Endgerät anhand einer empfangenen Kennung des Äquivalenzbereichs 202 oder anhand der empfangenen Kennung des Suchbereichs 200a,b unter Heranziehung der zugehörigen Liste feststellt, dass es - beispielsweise aufgrund eines Standortwechsels oder eines Wechsel des Betriebszustands - in einen neuen Äquivalenzbereich 202 eingetreten ist, dann meldet es dies an das Netzwerk. Dieser Vorgang wird im Folgenden auch als Suchbereichsaktualisierungsvorgang bezeichnet.

Neben den Suchbereichsaktualisierungsvorgängen aufgrund eines Wechsels des Äquivalenzbereichs 202 sind in einer Ausführungsform auch periodische Suchbereichsaktualisierungsvorgänge vorgesehen, die nach Ablauf einer vorgegebenen Zeitdauer seit dem letzten Suchbereichsaktualisierungsvorgang unabhängig vom Wechsel des Äquivalenzbereichs 202 vorgenommen werden. Zur Durchführung der periodischen Suchbereichsaktualisierungsvorgänge wird in dem Endgerät 102 nach jedem Suchbereichsaktualisierungsvorgang ein Timer gestartet (auch nach einem Suchbereichsaktualisierungsvorgang aufgrund eines Standortwechsels oder eines Wechsels des Betriebszustands). Sobald mittels des Timers festgestellt wird, dass eine vorgegebene Zeitdauer abgelaufen ist, wird ein Suchbereichsaktualisierungsvorgang durchgeführt und der Timer neu gestartet.

Die Informationen, die von einem Endgerät 102 bei einem Suchbereichsaktualisierungsvorgang an das Kommunikationssystem gemeldet werden, umfassen den aktuellen Suchbereich 200a,b und/oder die aktuelle Funkzelle 108a,b des Endgeräts 102. Der Suchbereich 200a,b und/oder die Funkzelle 108a,b werden anhand der Kennungen identifiziert, die das Endgerät 102 über den Broadcast-Funkkanal empfangen hat. Sofern bei einem Suchbereichsaktualisierungsvorgang lediglich die aktuelle Funkzelle 108a,b angegeben wird, kann der aktuelle Suchbereich 200a,b des Endgeräts 102 netzwerkseitig anhand einer Zuordnungsliste zwischen den vorhanden Funkzellen 108a,b und den Suchbereichen 200a,b ermittelt werden. Die netzwerkseitig erhaltenen Informationen über den aktuellen Suchbereich 200a,b und/oder die aktuelle Funkzelle 108a,b des Endgeräts 102 werden in dem Kernnetzwerk 100 in einem Register innerhalb eines dem betreffenden Endgerät 102 zugeordneten Registereintrags gespeichert.

Der Gerätesuchruf wird von dem Kommunikationssystem ausgesandt, wenn eine Kommunikationsverbindung zu dem Endgerät 102 aufgebaut werden soll. Zur Durchführung des Gerätesuchrufs werden innerhalb des Kernnetzwerks 100 zunächst die Funkzellen 108a,b ermittelt, in denen der Suchruf ausgesendet werden soll. Dann werden von dem Kernnetzwerk 100 die Basisstationen 106a,b angesprochen, welche die ermittelten Funkzellen 108a,b versorgen. Von den Basisstationen 106a,b wird der Gerätesuchruf dann innerhalb der ermittelten Funkzellen 108a,b der Zugangsnetzwerke 104a,b ausgesendet. Hierzu steht in den Zugangsnetzwerken 104a,b ein Paging-Funkkanal bereit, der im Falle von 3GPP-Netzen als PCH bezeichnet wird.

Zur Ermittlung der Funkzellen 108a,b, in denen der Gerätesuchruf gesendet werden soll, wird im Kernnetzwerk 100 in einer Ausführungsform der Suchbereich ermittelt, der bei dem letzten Suchbereichsaktualisierungsvorgang von dem Endgerät 102 an das Kommunikationssystem gemeldet worden ist. Ferner wird der Äquivalenzbereich 202 bestimmt, dem der Suchbereich 200a,b zugeordnet ist. Ein erster Gerätesuchruf wird in dieser Ausgestaltung in dem Suchbereich 200a,b ausgesendet, in dem sich das Endgerät 102 bei dem letzten Suchbereichsaktualisierungsvorgang befunden hat. Nach dem Senden des Gerätesuchruf in den Funkzellen 108a,b dieses Suchbereichs 200a,b prüft das Kernnetzwerk 100, ob innerhalb eines vorgegebenen Zeitintervalls eine Antwort von dem Endgerät 102 erhalten wird. Wird auf den ersten Gerätesuchruf eine Antwort des Endgeräts 102 erhalten, dann wird die Kommunikationsverbindung zu dem Endgerät 102 aufgebaut.

Falls innerhalb des vorgegebenen Zeitintervalls keine Antwort des Endgeräts 102 auf den ersten Gerätesuchruf empfangen wird, dann initiiert das Kernnetzwerk 100 einen zweiten Gerätesuchruf. Um die Wahrscheinlichkeit zu erhöhen, das Endgerät 102 mit dem zweiten Gerätesuchruf zu erreichen, wird dieser in einem größeren Bereich ausgesendet als der erste Gerätesuchruf. Der zweite Gerätesuchruf in den Funkzellen 108a,b des Suchbereichs 200a,b ausgesendet wird, in dem sich das Endgerät 102 beim letzten Suchbereichsaktualisierungsvorgang befunden hat, und zusätzlich in den Funkzellen 108a,b eines oder mehrerer weiterer Suchbereiche 200a,b des Äquivalenzbereichs 202, in dem sich das Endgerät 102 beim letzten Suchbereichsaktualisierungsvorgang befunden hat. Vorzugsweise erfolgt dabei eine Ausdehnung des Suchrufs auf einen oder mehrere Suchbereiche 200a,b, die räumlich benachbart sind zu dem Suchbereich 200a,b, in dem das Endgerät beim letzten Suchbereichsaktualisierungsvorgang geortet worden ist, oder - im Fall von Suchbereichen 200a,b in mehreren Funknetzwerken 104a,b - mit diesem Suchbereich 200a,b räumlich überlappen. In benachbarten oder überlappenden Suchbereichen 200a,b ist die Wahrscheinlichkeit größer, das Endgerät 102 aufzufinden, da sich die meisten Nutzer von mobilen Endgeräten 102 in der Regel selten schnell und über eine große Entfernung bewegen. Wenn auf den zweiten Gerätesuchruf innerhalb einer vorgegebenen Zeitspanne eine Antwort des Endgeräts 102 erhalten worden ist, kann die Kommunikationsverbindung zu dem Endgerät 102 aufgebaut werden. Die vorgegebene Zeitspanne entspricht vorzugsweise der Zeitspanne, in der auch nach dem ersten Gerätesuchruf die Antwort des Endgeräts 102 erwartet wird. Gleichfalls kann jedoch auch eine andere Zeitspanne gewählt werden.

Wird innerhalb der vorgegebenen Zeitspanne keine Antwort des Endgeräts 102 auf den zweiten Gerätesuchruf empfangen, dann werden sukzessive weitere Gerätesuchrufe in einer vorgegebenen Anzahl ausgesandt, wobei nach jedem Gerätesuchruf abgewartet wird, ob innerhalb einer vorgegebenen Zeitspanne eine Antwort auf den Gerätesuchruf empfangen wird. Ist dies der Fall, wird das Paging abgebrochen und die Kommunikationsverbindung zu dem Kernnetzwerk 100 aufgebaut. Wenn nach der Aussendung von Gerätesuchrufen in der vorgegebenen Anzahl keine Antwort von dem Endgerät 102 empfangen worden ist, dann wird das Paging ergebnislos abgebrochen.

Die Bereiche, in denen die Gerätesuchrufe ausgesandt werden, werden jeweils gegenüber dem vorangegangenen vergrößert bis sie den gesamten Äquivalenzbereich 202 umfassen. Bei jeder Vergrößerung werden ein oder mehrere Suchbereiche 200a,b des Äquivalenzbereichs 202 zu dem Pagingbereich ergänzt. Die ergänzten Suchbereiche 200a,b sind dabei vorzugsweise räumlich benachbart oder überlappend zu den Suchbereichen 200a,b angeordnet, in denen der vorangegangene Gerätesuchruf ausgesendet worden ist. Dabei können die berücksichtigten Suchbereiche 200a,b für jeden Gerätsuchruf individuell vorgegeben werden, oder es können Regeln vorgegeben werden, nach denen der Pagingbereich vergrößert wird. Beispielsweise kann eine solche Regel vorsehen, dass jeweils die räumlich zum letzten Pagingbereich benachbarten bzw. die überlappenden Suchbereiche 200a,b des Äquivalenzbereichs 202 zu dem Pagingbereich hinzugefügt werden.

Der letzte Gerätesuchruf oder einer der vorhergehenden, dem ersten Gerätesuchruf nachfolgenden Gerätesuchruf wird innerhalb des gesamten Äquivalenzbereichs 202 ausgesendet. Da sich das Endgerät 102 in einer Funkzelle des Äquivalenzbereichs 202 befindet, sofern es nicht abgeschaltet worden ist oder der Kontakt zu einem Funknetzwerk 104a,b aus anderen Gründen unterbrochen worden ist, wird hierdurch sichergestellt, dass das Endgerät 102 mit diesem Gerätesuchruf sicher erreicht werden kann.

In weiteren Ausgestaltungen wird der erste Gerätesuchruf nicht in dem Suchbereich 200a,b ausgesendet, in dem sich das Endgerät 102 beim letzten Suchbereichsaktualisierungsvorgang befunden hat, sondern in einem kleineren Pagingbereich. Hierbei kann es sich um die Funkzelle 108a,b handeln, die es beim letzten Suchbereichsaktualisierungsvorgang als Standort an das Kernnetzwerk 100 gemeldet hat. Oder der Pagingbereich umfasst die Funkzellen 108a,b, in denen sich das Endgerät 102 beim letzten Suchbereichsaktualisierungsvorgang befunden hat, sowie vorgegebene benachbarte Funkzellen 108a,b. Bei den benachbarten Funkzellen 108a,b kann es sich um die Funkzellen 108a,b desselben Funknetzwerks 104a,b handeln, die von derselben Basisstation 106a,b versorgt werden. Hierdurch wird erreicht, dass nur eine einzige Basisstation 106a,b bei dem ersten Gerätesuchruf belastet wird.

Wie bei der zuvor beschriebenen Ausgestaltung überprüft das Kernnetzwerk 100 nach dem Senden des Gerätesuchrufs, ob innerhalb eines vorgegebenen Zeitintervalls eine Antwort von dem Endgerät 102 erhalten wird. Die Dauer des Zeitintervall entspricht vorzugsweise der des entsprechenden Zeitintervalls bei der vorherigen Ausführungsform. Wird auf den ersten Gerätesuchruf eine Antwort des Endgeräts 102 erhalten, dann wird die Kommunikationsverbindung zu dem Endgerät 102 aufgebaut.

Falls innerhalb des vorgegebenen Zeitintervalls keine Antwort des Endgeräts 102 auf den ersten Gerätesuchruf empfangen wird, initiiert das Kernnetzwerk 100 einen zweiten Gerätesuchruf in einem größeren Pagingbereich. Dabei kann der Pagingbereich für den zweiten Gerätesuchruf den vollständigen Suchbereich umfassen, zu dem die Funkzelle 108a,b gehört, in dem sich das Endgerät 102 beim letzten Suchbereichsaktualisierungsvorgang befunden hat. Alternativ kann der Pagingbereich auch beim zweiten Pagingbereich zusätzlich weitere Suchbereiche 200a,b umfassen, vorzugsweise Suchbereiche 200a,b, die zu dem Suchbereich 200a,b benachbart sind bzw. den Suchbereich 200a,b überlappen, in dem sich das Endgerät 102 beim letzten Suchbereichsaktualisierungsvorgang befunden hat.

Nach dem zweiten Gerätesuchruf wird wiederum ermittelt, ob das Endgerät 102 innerhalb eines vorgegebenen Zeitintervalls antwortet. Ist dies der Fall, dann wird die Kommunikationsverbindung zu dem Endgerät 102 aufgebaut. Falls das Endgerät 102 nicht antwortet, dann werden analog zu der vorherigen Ausgestaltung sukzessive weitere Gerätsuchrufe in einer vorgegebenen Anzahl ausgesendet. Nach jedem Gerätesuchruf wird ermittelt, ob das Endgerät 102 in einem vorgegebenen Zeitintervall antwortet. Wird eine Antwort des Endgeräts 102 empfangen, dann erfolgt der Aufbau der Kommunikationsverbindung; andernfalls wird der nächste Gerätesuchruf ausgesendet. Sofern auf den letzten vorgesehenen Gerätesuchruf keine Antwort erhalten wird, wird das Paging abgebrochen. Für die weiteren, auf den zweiten Gerätesuchruf folgenden Gerätesuchrufe wird der Pagingbereich sukzessive vergrößert, bis er den gesamten Äquivalenzbereich 202 umfasst, in dem sich das Endgerät 102 befindet. Bei jeder Vergrößerung werden dem Pagingbereich vorzugsweise Suchbereiche 200a,b hinzugefügt, die benachbart zu dem vorangegangenen Pagingbereich angeordnet sind bzw. diesen überlappen.

Die Vergrößerung des Pagingbereichs erfolgt derart, dass beim letzten vorgesehenen Gerätesuchruf der gesamte Äquivalenzbereich 202 umfasst ist, in dem sich das Endgerät 102 befindet. Dabei kann es auch vorgesehen sein, dass bereits der dritte Gerätesuchruf innerhalb des gesamten Äquivalenzbereichs 202 ausgesendet wird, um die maximal notwendige Anzahl von Gerätsuchrufen zu begrenzen.

Eine weitere Ausgestaltung sieht vor, dass bei den periodischen Suchbereichsaktualisierungen ermittelt wird, ob sich das Endgerät 102 über eine längere Zeit in einem einzigen Suchbereich 200a,b aufhält. Ist dies der Fall, dann wird der dem Endgerät 102 zugeordnete Äquivalenzbereich 202 auf den Suchbereich verkleinert, in dem sich das Endgerät 102 befindet.

Hierzu werden im Kernnetzwerk die Suchbereiche 200a,b miteinander verglichen, die das Endgerät 102 bei aufeinander folgenden Suchbereichsaktualisierungsvorgängen meldet. Wird dabei festgestellt, dass sich der Suchbereich 200a,b, in dem sich das Endgerät 102 befindet, nach einer vorgegebenen Anzahl von Suchbereichsaktualisierungsvorgängen nicht ändert, dann wird der Äquivalenzbereich 202 auf den Suchbereich 200a,b beschränkt, in dem sich das Endgerät 102 befindet. Periodische Suchbereichsaktualisierungsvorgänge können in regelmäßigen bzw. vorgegebenen Zeitabständen durchgeführt werden.

Alternativ zu einer Beschränkung des Äquivalenzbereichs 202 auf einen einzigen Suchbereich 200a,b kann es auch vorgesehen sein, dass der Äquivalenzbereich 202 auf mehrere Suchbereiche 200a,b beschränkt wird, die Bestandteil des ursprünglichen Äquivalenzbereichs 202 des Endgeräts 102 waren, und die das Endgerät 102 bei einer vorgegebenen Anzahl von Suchbereichsaktualisierungsvorgängen nicht verlässt. Hierbei kann es sich beispielsweise um zwei oder drei benachbarte Suchbereiche 200a,b innerhalb eines allgemeinen Äquivalenzbereichs 202 handeln, d.h. eines der vorkonfigurierten Äquivalenzbereiche 202, die in dieser Ausführungsform beschränkt werden können. Diese Ausführungsform ermöglicht auch dann eine Beschränkung des Pagingbereichs, wenn sich ein Endgerät 102 nur geringfügig bewegt, jedoch fortwährend zwischen zwei Suchbereichen 200a,b wechselt.

Bei dieser Ausführungsform wird die Kennung des Äquivalenzbereichs 202 vorzugsweise nicht von dem Funknetzwerk 104a,b über den Broadcast-Funkkanal gesendet, sondern die Zuordnung von Suchbereichen 200a,b zu Äquivalenzbereichen 202 ist in einer Liste innerhalb des Endgeräts 102 gespeichert. Nachdem der Äquivalenzbereich 202 auf einen einzigen Suchbereich 200a,b beschränkt worden ist, wird dies auch innerhalb des Endgeräts 102 gespeichert. Hierzu kann beispielsweise ein neuer Äquivalenzbereich 202 in der Liste angelegt werden, der lediglich den betreffenden Suchbereich 200a,b enthält. Die Zuordnung dieses Suchbereichs 200a,b zu dem ursprünglichen Äquivalenzbereich 202 wird temporär als ungültig markiert. Innerhalb des Kernnetzwerks 100 wird der neue Äquivalenzbereich 202 des Endgeräts 102 ebenfalls in einer Datenbank vermerkt.

Die Speicherung des neuen Äquivalenzbereichs 202 in dem Endgerät 102 kann aufgrund einer entsprechenden Nachricht erfolgen, die netzwerkseitig erzeugt wird, wenn dem Endgerät 102 der neue Äquivalenzbereich 202 zugeordnet worden ist und anschließend an das Endgerät 102 übermittelt wird. Gleichfalls kann es jedoch vorgesehen sein, dass im Endgerät 102 selbst geprüft wird, ob sich der aktuelle Suchbereich 200a,b bei aufeinander folgenden Suchbereichsaktualisierungsvorgängen in der vorgegebenen Anzahl nicht verändert, und die Speicherung des neuen Äquivalenzbereichs 202 vorgenommen wird, wenn dies der Fall ist. Dies kann von einer Anwendung vorgenommen werden, die in dem Endgerät 102 selbst ausgeführt wird oder in dem Teilnehmeridentifikationsmodul.

Verlässt das Endgerät 102 den Suchbereich 200a,b, der ihm als Äquivalenzbereich 202 zugeordnet worden ist, dann tritt es in einen neuen Äquivalenzbereich 202 ein, und es wird ein Suchbereichsaktualisierungsvorgang ausgeführt. Nach dem Suchbereichsaktualisierungsvorgang wird der zuvor temporär dem Endgerät 102 zugeordnete Äquivalenzbereich 202, der den Suchbereich 200a,b umfasst, in dem sich das Endgerät 102 länger aufgehalten hat, gelöscht. Dies geschieht sowohl netzwerkseitig als auch innerhalb des Endgeräts 102. Nach dem Löschen werden für die Suchbereichsaktualisierungsvorgänge und das Paging wieder die allgemein definierten Äquivalenzbereiche 202 zugrunde gelegt. Eine erneute Beschränkung des Äquivalenzbereichs 202 erfolgt dann, wenn die zuvor genannten Kriterien hierfür erfüllt sind.

Solange dem Endgerät 102 temporär ein einzelner Suchbereich 200a,b als Äquivalenzbereich 202 zugeordnet ist, wird ein Gerätesuchruf in den Funkzellen 108a,b des Suchbereichs 200a,b ausgesendet. Hierdurch kann das Endgerät 102 mit einem Gerätesuchruf erreicht werden, sofern es nicht den Kontakt zu dem betreffenden Funknetzwerk 104a,b verloren hat. Um das Endgerät 102 auch dann mit einem Gerätesuchruf erreichen zu können, wenn der Kontakt zu dem Funknetz 104a,b bei einem oder mehreren Gerätesuchrufen vorübergehend unterbrochen ist, wird der Gerätesuchruf vorzugsweise wiederholt, wenn eine Antwort des Endgeräts 102 nicht innerhalb eines vorgegebenen Zeitintervalls empfangen wird. Die Anzahl der Wiederholungen und die Dauer der Zeitintervalle zwischen den Gerätesuchrufen sind im Kernnetzwerk 100 als Parameter hinterlegt.

Der Fachmann erkennt, dass die zuletzt beschriebenen Ausgestaltungen, bei denen eine Beschränkung des Äquivalenzbereichs 202 vorgesehen ist, sowie die zuvor beschriebenen Ausgestaltungen, bei denen der Pagingbereich sukzessive vergrößert wird, miteinander kombinierbar sind, bzw. gleichzeitig in einem Kommunikationssystem realisiert werden können. Situationsabhängig wird dabei die bei deinem Endgerät 102 anzuwendende Ausgestaltung ausgewählt.

Obwohl die Erfindung in den Zeichnungen und der vorausgegangenen Darstellung im Detail beschrieben wurde, sind die Darstellungen illustrativ bzw. beispielhaft und nicht einschränkend zu verstehen; insbesondere ist die Erfindung nicht auf die erläuterten Ausführungsbeispiele beschränkt. Weitere Varianten der Erfindung und ihrer Ausführung ergeben sich für den Fachmann aus der vorangegangenen Offenbarung, den Figuren und den Patentansprüchen.

In den Patentansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer der in den Patentansprüchen genannten Einheiten beziehungsweise Einrichtungen ausführen.

In den Patentansprüchen angegebene Bezugszeichen sind nicht als Beschränkungen der eingesetzten Mittel und Schritte anzusehen.

## Patentansprüche

1. Verfahren zum Lokalisieren eines mobilen Endgeräts (102) in einem Netzwerksystem, das wenigstens ein erstes Zugangsnetzwerk (104a; 104b) eines ersten Mobilfunkstandards umfasst, welches mehrere Zellen aufweist, die zu einem oder mehreren Suchbereichen (200a; 200b) zusammengefasst sind, wobei ein oder mehrere Suchbereiche (200a; 200b) wenigstens des ersten Zugangsnetzwerks (104a; 104b) zu einem Äquivalenzbereich (202) zusammengefasst sind und wobei das mobile Endgerät 102 bei einem Eintritt in einen Äquivalenzbereich (202) eine Lokalisierungsnachricht an das erste Zugangsnetzwerk (104a; 104b) sendet und/oder das mobile Endgerät (102) in vorgegebenen Zeitabständen Lokalisierungsnachrichten an das erste Zugangsnetzwerk (104a,b) sendet, wobei die Lokalisierungsnachrichten eine Angabe eines Unterbereichs eines Äquivalenzbereichs (202) enthalten, in dem sich das mobile Endgerät (102) bei Absendungen einer Lokalisierungsnachricht befindet, dass netzwerkseitig wenigstens der in der zuletzt erhaltenen Lokalisierungsnachricht angegebene Unterbereich gespeichert wird, und dass wenigstens ein erster netzwerkseitiger Endgerätesuchruf innerhalb des gespeicherten Unterbereichs ausgesendet wird, um das mobile Endgerät (102) zu lokalisieren, wobei wenigstens ein zweiter netzwerkseitiger Endgerätesuchruf innerhalb eines weiteren Unterbereichs des Äquivalenzbereichs (202), in dem sich der gespeicherte Unterbereich befindet, ausgesendet wird, wenn das mobile Endgerät (102) den ersten Endgerätesuchruf nicht innerhalb eines vorgegebenen Zeitintervalls beantwortet,
**dadurch gekennzeichnet,**
**dass** es sich bei dem weiteren Unterbereich um wenigstens einen räumlich mit dem gespeicherten Unterbereich überlappenden und/oder räumlich zu dem gespeicherten Unterbereich benachbarten Unterbereich eines zweiten Zugangsnetzwerks (104a; 104b) eines zweiten Mobilfunkstandards handelt,
wobei der zweite Mobilfunkstandard verschieden vom ersten Mobilfunkstandard ist, und wobei das zweite Zugangsnetzwerk (104a; 104b) verschieden von dem ersten Zugangsnetzwerk (104a; 104b) ist, dem der gespeicherte Unterbereich zugehörig ist, wobei das erste und das zweite Zugangsnetzwerk (104a; 104b) mit einem Kernnetzwerk (100) verbunden sind und dem ersten und zweiten Zugangsnetzwerk (104a; 104b) jeweils eine Vielzahl von Basisstationen zugeordnet sind, die entsprechend einer Zugangstechnologie des ersten oder zweiten Zugangsnetzwerks (104a; 104b) ausgestaltet sind.

2. Verfahren nach Anspruch 1, wobei es sich bei dem gespeicherten Unterbereich um eine erste Zelle (108a; 108b) des ersten Zugangsnetzwerks (104a; 104b) handelt.

3. Verfahren nach Anspruch 1, wobei es sich bei dem gespeicherten Unterbereich um einen ersten Suchbereich (200a; 200b) des ersten Zugangsnetzwerks (104a; 104b) handelt.

4. Verfahren nach einem der vorangegangenen Ansprüche, wobei der weitere Unterbereich wenigstens eine dem gespeicherten Unterbereich räumlich benachbarte Zelle (108a; 108b) des ersten Zugangsnetzwerks (104a; 104b) umfasst und/oder der weitere Unterbereich einen wenigstens eine Zelle (108a; 108b) umfassenden Zellbereich des zweiten Zugangsnetzwerks (104a; 104b) umfasst, und wobei der Zellbereich räumlich mit dem gespeicherten Unterbereich überlappt oder räumlich benachbart zu dem gespeicherten Unterbereich angeordnet ist.

5. Verfahren nach einem der Ansprüche 1 - 3, wobei der weitere Unterbereich wenigstens einen dem gespeicherten Unterbereich räumlich benachbarten Suchbereich (200a; 200b) des ersten Zugangsnetzwerks (104a; 104b) umfasst und/oder der weitere Unterbereich einen wenigstens einen Suchbereich (200a; 200b) umfassenden Suchbereichsabschnitt des zweiten Zugangsnetzwerks (104a; 104b) umfasst, wobei der Suchbereichsabschnitt mit dem gespeicherten Unterbereich räumlich überlappt oder räumlich benachbart zu dem gespeicherten Unterbereich ist.

6. Verfahren nach einem der vorangegangenen Ansprüche, wobei der weitere Unterbereich zusätzlich den gespeicherten Unterbereich umfasst.

7. Verfahren nach einem der vorangegangenen Ansprüche, wobei der weitere Unterbereich den gesamten Äquivalenzbereich (202) umfasst, dem der gespeicherte Unterbereich zugehörig ist.

8. Verfahren nach einem der vorangegangenen Ansprüche, wobei netzwerkseitig die in einer Mehrzahl nacheinander gesendeter Lokalisierungsnachrichten angegebenen Unterbereiche gespeichert werden, und wobei der Äquivalenzbereich (202), auf den in der zuletzt erhaltenen Lokalisierungsnachricht angegebene Unterbereich verkleinert wird, wenn der in der zuletzt erhaltenen Lokalisierungsnachricht angegebene Unterbereich mit den Unterbereichen übereinstimmt, die in einer vorgegebenen Anzahl von Lokalisierungsnachrichten enthalten sind, die der zuletzt erhaltenen Lokalisierungsnachricht vorausgegangen sind.

9. Verfahren nach Anspruch 8, wobei es sich bei den Unterbereichen um Suchbereiche (200a; 200b) handelt.

10. Verfahren nach Anspruch 8 oder 9, wobei das mobile Endgerät (102) eine Lokalisierungsnachricht an das Netzwerksystem sendet, wenn es in eine Zelle (108a; 108b) eines Zugangsnetzwerks (104a; 104b) eintritt, die dem verkleinerten Unterbereich nicht zugehörig ist.

11. Verfahren nach einem der vorangegangenen Ansprüche, wobei das Netzwerksystem ein E-UTRAN umfasst.

12. Kommunikationssystem umfassend wenigstens ein erstes Zugangsnetzwerk (104a; 104b) eines ersten Mobilfunkstandards, welches mehrere Zellen (108a; 108b) aufweist, die zu einem oder mehreren Suchbereichen (200a; 200b) zusammengefasst sind, wobei ein oder mehrere Suchbereiche (200a; 200b) wenigstens des ersten Zugangsnetzwerks (104a; 104b) zu einem Äquivalenzbereich (202) zusammengefasst sind, und umfassend ein mobiles Endgerät (102), das dazu eingerichtet ist, bei einem Eintritt in einen Äquivalenzbereich (202) eine Lokalisierungsnachricht an das erste Zugangsnetzwerk (104a; 104b) und/oder das mobile Endgerät (102) eingerichtet ist in vorgegebenen Zeitabständen Lokalisierungsnachrichten an das erste Zugangsnetzwerk (104a; 104b) zu senden, wobei die Lokalisierungsnachrichten eine Angabe eines Unterbereichs eines Äquivalenzbereichs (202) enthalten, in dem sich das mobile Endgerät (102) bei Absendung einer Lokalisierungsnachricht befindet und dass eine Einrichtung (100) vorhanden ist, die dazu ausgebildet ist, wenigstens den in der zuletzt erhaltenen Lokalisierungsnachricht angegebenen Unterbereich zu speichern und die Aussendung wenigstens eines ersten Endgerätesuchrufs innerhalb des gespeicherten Unterbereichs auszulösen, um das mobile Endgerät (102) zu lokalisieren, wobei wenigstens ein zweiter netzwerkseitiger Endgerätesuchruf innerhalb eines weiteren Unterbereichs des Äquivalenzbereichs (202), in dem sich der gespeicherte Unterbereich befindet, ausgesendet wird, wenn das mobile Endgerät (102) den ersten Endgerätesuchruf nicht innerhalb eines vorgegebenen Zeitintervalls beantwortet,
**dadurch gekennzeichnet,**
**dass** es sich bei dem weiteren Unterbereich um wenigstens einen räumlich mit dem gespeicherten Unterbereich überlappenden und/oder räumlich zu dem gespeicherten Unterbereich benachbarten Unterbereich eines zweiten Zugangsnetzwerks (104a; 104b) eines zweiten Mobilfunkstandards handelt, wobei der zweite Mobilfunkstandard verschieden vom ersten Mobilfunkstandard ist, und wobei das zweite Zugangsnetzwerk (104a; 104b) verschieden von dem ersten Zugangsnetzwerk (104a; 104b) ist, dem der gespeicherte Unterbereich zugehörig ist, wobei das erste und das zweite Zugangsnetzwerk (104a; 104b) mit einem Kernnetzwerk (100) verbunden sind und dem ersten und zweiten Zugangsnetzwerk (104a; 104b) jeweils eine Vielzahl von Basisstationen zugeordnet sind, die entsprechend einer Zugangstechnologie des ersten oder zweiten Zugangsnetzwerks (104a; 104b) ausgestaltet sind.

## Claims

1. A method for locating a mobile terminal device (102) in a network system comprising at least a first access network (104a; 104b) that falls under a first mobile phone standard having several cells that are combined to form one or more tracking areas (200a; 200b), whereby one or more tracking areas (200a; 200b) of at least the first access network (104a; 104b) are combined to form an equivalent area (202), and whereby, when the mobile terminal device (102) enters an equivalent area (202), it transmits a locating message to the first access network (104a; 104b) and/or it transmits locating messages to the first access network (104a,b) at prescribed time intervals, whereby the locating messages indicate a sub-area of an equivalent area (202) in which the mobile terminal device (102) is located during transmissions of a locating message, in that at least the sub-area indicated in the most recently received locating message is stored by the network, and in that at least a first terminal device tracking call is transmitted by the network within the stored sub-area in order to locate the mobile terminal device (102), whereby at least a second terminal device tracking call within an additional sub-area of the equivalent area (202) in which the stored sub-area is located is transmitted if the mobile terminal device (102) does not respond to the first terminal device tracking call within a prescribed period of time,
**characterized in that**
the additional sub-area comprises at least one sub-area - spatially overlapping with and/or spatially adjacent to the stored sub-area - of a second access network (104a; 104b) that falls under a second mobile phone standard, whereby the second mobile phone standard differs from the first mobile phone standard, and whereby the second access network (104a; 104b) differs from the first access network (104a; 104b) to which the stored sub-area belongs, whereby the first and the second access networks (104a; 104b) are connected to a core network (100), and the first and second access networks (104a; 104b) are each associated with a plurality of base stations that are equipped in accordance with access technology of the first or second access network (104a; 104b).

2. The method according to claim 1, wherein the stored sub-area is a first cell (108a; 108b) of the first access network (104a; 104b).

3. The method according to claim 1, wherein the stored sub-area is a first tracking area (200a; 200b) of the first access network (104a; 104b).

4. The method according to one of the preceding claims, wherein the additional sub-area comprises at least one cell (108a; 108b) of the first access network (104a; 104b) that is spatially adjacent to the stored sub-area, and/or the additional sub-area comprises a cell area of the second access network (104a; 104b) comprising at least one cell (108a; 108b), and wherein the cell area spatially overlaps with the stored sub-area or is spatially adjacent to the stored sub-area.

5. The method according to one of the claims 1 to 3, wherein the additional sub-area comprises at least one tracking area (200a; 200b) of the first access network (104a; 104b) that is spatially adjacent to the stored sub-area, and/or that the additional sub-area comprises a tracking area section of the second access network (104a; 104b) comprising at least one tracking area (200a; 200b), wherein the tracking area section spatially overlaps with the stored sub-area or is spatially adjacent to the stored sub-area.

6. The method according to one of the preceding claims, wherein the additional sub-area also comprises the stored sub-area.

7. The method according to one of the preceding claims, wherein the additional sub-area comprises the entire equivalent tracking area (202) to which the first sub-area belongs.

8. The method according to one of the preceding claims, wherein the sub-areas which were indicated in several consecutively transmitted locating messages are stored by the network, and wherein the equivalent area (202) is reduced in size to the sub-area indicated in the most recently received locating message if the sub-area indicated in the most recently received locating message corresponds to the sub-areas that are contained in a prescribed number of locating messages that preceded the most recently received locating message.

9. The method according to Claim 8, wherein the sub-areas are tracking areas (200a; 200b).

10. The method according to Claim 8 or 9, wherein the mobile terminal device (102) transmits a locating message to the network system when it enters a cell (108a; 108b) of an access network (104a; 104b) that does not belong to the reduced sub-area.

11. The method according to one of the preceding claims, wherein the network system is an E-UTRAN.

12. A communication system comprising at least a first access network (104a; 104b) that falls under a first mobile phone standard having several cells (108a; 108b) that are combined to form one or more tracking areas (200a; 200b), whereby one or more tracking areas (200a; 200b) of at least the first access network (104a; 104b) are combined to form one equivalent area (202), and said communication system comprising a mobile terminal device (102) that is configured in such a way that, when a mobile terminal device (102) enters an equivalent area (202), it transmits a locating message to the first access network (104a; 104b), and/or the mobile terminal device (102) is configured to transmit locating messages to the first access network (104a; 104b) at prescribed time intervals, whereby the locating messages indicate a sub-area of an equivalent area (202) in which the mobile terminal device (102) is located during the transmission of a locating message, and in that a device (100) is present that is configured to store at least the sub-area indicated in the most recently received locating message and to trigger the transmission of at least a first terminal device tracking call within the stored sub-area in order to locate the mobile terminal device (102), whereby at least a second terminal device tracking call within an additional sub-area of the equivalent area (202) in which the stored sub-area is located is transmitted if the mobile terminal device (102) does not respond to the first terminal device tracking call within a prescribed period of time,
**characterized in that**
the additional sub-area comprises at least one sub-area - spatially overlapping with and/or spatially adjacent to the stored sub-area - of a second access network (104a; 104b) that falls under a second mobile phone standard, whereby the second mobile phone standard differs from the first mobile phone standard, and whereby the second access network (104a; 104b) differs from the first access network (104a; 104b) to which the stored sub-area belongs, whereby the first and the second access networks (104a; 104b) are connected to a core network (100), and the first and second access networks (104a; 104b) are each associated with a plurality of base stations that are equipped in accordance with access technology of the first or second access network (104a; 104b).

## Revendications

1. Procédé de localisation d'un terminal mobile (102) dans un système de réseau qui comprend au moins un premier réseau d'accès (104a ; 104b) d'une première norme radio mobile qui comporte plusieurs cellules qui sont regroupées en une ou plusieurs zones de recherche (200a ; 200b), une ou plusieurs zones de recherche (200a ; 200b) d'au moins le premier réseau d'accès (104a ; 104b) étant regroupées en une zone d'équivalence (202) et le terminal mobile (102) envoyant, lors d'une entrée dans une zone d'équivalence (202), un message de localisation au premier réseau d'accès (104a ; 104b) et/ou le terminal mobile (102) envoyant des messages de localisation au premier réseau d'accès (104a, b) à intervalles de temps prédéfinis, les messages de localisation contenant une mention d'une sous-zone d'une zone d'équivalence (202) dans laquelle le terminal mobile (102) se trouve lors des émissions d'un message de localisation, au moins la sous-zone indiquée dans le message de localisation reçu en dernier lieu étant stockée côté réseau et au moins un premier appel de recherche de terminaux côté réseau étant émis dans la sous-zone stockée pour localiser le terminal mobile (102), au moins un deuxième appel de recherche de terminaux côté réseau étant émis dans une autre sous-zone de la zone d'équivalence (202) dans laquelle se trouve la sous-zone stockée lorsque le terminal mobile (102) ne répond pas au premier appel de recherche de terminaux dans un intervalle de temps prédéterminé,
**caractérisé en ce que**
l'autre sous-zone est au moins une sous-zone d'un deuxième réseau d'accès (104a ; 104b) d'une deuxième norme radio mobile en chevauchement spatial avec la sous-zone stockée et/ou voisine spatialement de la sous-zone stockée, la deuxième norme radio mobile étant différente de la première norme radio mobile et le deuxième réseau d'accès (104a ; 104b) étant différent du premier réseau d'accès (104a ; 104b) auquel appartient la sous-zone stockée, les premier et deuxième réseaux d'accès (104a ; 104b) étant reliés à un réseau central (100) et aux premier et deuxième réseaux d'accès (104a ; 104b) étant associée respectivement une pluralité de stations de base qui sont conçues selon une technologie d'accès du premier ou du deuxième réseau d'accès (104a ; 104b).

2. Procédé selon la revendication 1, la sous-zone stockée étant une première cellule (108a ; 108b) du premier réseau d'accès (104a ; 104b).

3. Procédé selon la revendication 1, la sous-zone stockée étant une première zone de recherche (200a ; 200b) du premier réseau d'accès (104a ; 104b).

4. Procédé selon l'une des revendications précédentes, l'autre sous-zone comprenant au moins une cellule (108a ; 108b) du premier réseau d'accès (104a ; 104b) voisine dans l'espace de la sous-zone stockée et/ou l'autre sous-zone comprenant une zone cellulaire du deuxième réseau d'accès (104a ; 104b) comprenant au moins une cellule (108a ; 108b) et la zone cellulaire étant agencée en chevauchement spatial avec la sous-zone stockée ou voisine dans l'espace de la sous-zone stockée.

5. Procédé selon l'une des revendications 1 - 3, l'autre sous-zone comprenant au moins une zone de recherche (200a ; 200b) du premier réseau d'accès (104a ; 104b) voisine dans l'espace de la sous-zone stockée et/ou l'autre sous-zone comprenant une partie de zone de recherche du deuxième réseau d'accès (104a ; 104b) comprenant au moins une zone de recherche (200a ; 200b), la partie de zone de recherche étant en chevauchement spatial la sous-zone stockée ou voisine dans l'espace de la sous-zone stockée.

6. Procédé selon l'une des revendications précédentes, l'autre sous-zone comprenant en outre la sous-zone stockée.

7. Procédé selon l'une des revendications précédentes, l'autre sous-zone comprenant l'ensemble de la zone d'équivalence (202) à laquelle appartient la sous-zone stockée.

8. Procédé selon l'une des revendications précédentes, les sous-zones mentionnées dans une pluralité de messages de localisation émis les uns après les autres étant stockées côté réseau et la zone d'équivalence (202) à laquelle est réduite la sous-zone mentionnée dans le message de localisation reçu en dernier lieu lorsque la sous-zone mentionnée dans le message de localisation reçu en dernier lieu coïncide avec les sous-zones contenues dans un nombre prédéfini de messages de localisation qui ont précédé le message de localisation reçu en dernier lieu.

9. Procédé selon la revendication 8, les sous-zones étant des zones de recherche (200a ; 200b).

10. Procédé selon la revendication 8 ou 9, le terminal mobile (102) envoyant un message de localisation au système de réseau lorsqu'il entre dans une cellule (108a ; 108b) d'un réseau d'accès (104a ; 104b) qui n'appartient pas à la sous-zone réduite.

11. Procédé selon l'une des revendications précédentes, le système de réseau comprenant un E-UTRAN.

12. Système de communication, comprenant au moins un premier réseau d'accès (104a ; 104b) d'une première norme radio mobile, lequel comporte plusieurs cellules (108a ; 108b) regroupées en une ou plusieurs zones de recherche (200a ; 200b), une ou plusieurs zones de recherche (200a ; 200b) d'au moins le premier réseau d'accès (104a ; 104b) étant regroupées en une zone d'équivalence (202), et comprenant un terminal mobile (102) configuré pour envoyer, lors d'une entrée dans une zone d'équivalence (202), un message de localisation au premier réseau d'accès (104a ; 104b) et/ou le terminal mobile (102) étant configuré pour envoyer des messages de localisation au premier réseau d'accès ( 104a ; 104b) à intervalles de temps prédéfinis, les messages de localisation contenant une mention d'une sous-zone d'une zone d'équivalence (202) dans laquelle se trouve le terminal mobile (102) lors de l'émission d'un message de localisation et un dispositif (100) étant prévu, lequel est conçu pour stocker au moins la sous-zone indiquée dans le message de localisation reçu en dernier lieu et déclencher l'émission d'au moins un premier appel de recherche de terminaux dans la sous-zone stockée pour localiser le terminal mobile (102), au moins un deuxième appel de recherche de terminaux côté réseau étant émis dans une autre sous-zone de la zone d'équivalence (202) dans laquelle se trouve la sous-zone stockée lorsque le terminal mobile (102) ne répond pas au premier appel de recherche de terminaux dans un intervalle de temps prédéfini,
**caractérisé en ce que**
l'autre sous-zone est au moins une sous-zone d'un deuxième réseau d'accès (104a ; 104b) d'une deuxième norme radio mobile en chevauchement spatial avec la sous-zone stockée et/ou voisine spatialement de la sous-zone stockée, la deuxième norme radio mobile étant différente de la première norme radio mobile et le deuxième réseau d'accès (104a ; 104b) étant différent du premier réseau d'accès (104a ; 104b) auquel appartient la sous-zone stockée, les premier et deuxième réseaux d'accès (104a ; 104b) étant reliés à un réseau central (100) et aux premier et deuxième réseaux d'accès (104a ; 104b) étant associée respectivement une pluralité de stations de base qui sont conçues selon une technologie d'accès du premier ou du deuxième réseau d'accès (104a ; 104b).
